Europäisches Patentamt

European Patent Office

Office européen des brevets

(19)

(11) Veröffentlichungsnummer: **0 143 318**
**B1**

# EUROPÄISCHE PATENTSCHRIFT

(12)

(45) Veröffentlichungstag der Patentschrift:
22.04.87

(21) Anmeldenummer: **84112636.0**

(22) Anmeldetag: **19.10.84**

(51) Int. Cl.⁴: **C 07 C 155/10, A 01 N 47/26**

(54) **Verwendung von Formaldehyd oder Paraformaldehyd zur Stabilisierung von Polyethylenthiuramdisulfid.**

(30) Priorität: **27.10.83 DE 3338979**

(43) Veröffentlichungstag der Anmeldung:
**05.06.85 Patentblatt 85/23**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**US - A - 3 173 832**

(73) Patentinhaber: **BASF Aktiengesellschaft,
Carl-Bosch-Strasse 38, D-6700 Ludwigshafen (DE)**

(72) Erfinder: **Fischer, Roman, Dr., Deidesheimer Strasse 1,
D-6704 Mutterstadt (DE)**
Erfinder: **Koob, Knut, Dr., Lorscher Strasse 7,
D-6704 Mutterstadt (DE)**

## Beschreibung

Die vorliegende Erfindung betrifft die Verwendung von Formaldehyd oder Paraformaldehyd zur Stabilisierung von Polyethylenthiuramdisulfid sowie Verfahren zur Herstellung von stabilem Polyethylenthiuramdisulfid unter Verwendung von Formaldehyd oder Paraformaldehyd und stabiles Polyethylenthiuramdisulfid, das auf diese Weise hergestellt worden ist.

Es ist bekannt, Polyethylenthiuramdisulfid als Fungizid zu verwenden [R. Wegler, Chemie der Pflanzenschutz- und Schädlingsbekämpfungsmittel, Bd. 2, Seite 68 (1970)]. Polyethylenthiuramdisulfid wird hergestellt durch Oxidation von Ethylenbisdithiocarbaminsäure oder ihren wasserlöslichen Salzen in wässriger Lösung. Es hat den Nachteil, dass es bei längerer Lagerung, insbesondere bei erhöhter Temperatur, nicht stabil ist und sich zersetzt.

Aus US-3 173 832 ist es bekannt, Zineb oder Maneb mit Paraformaldehyd zu stabilisieren. Hierdurch wird die Stabilisierung von PETD nicht nahegelegt, da PETD weder ein Salz noch insbesondere ein Metallsalz sondern eine metallfreie Verbindung ist.

Es wurde nun gefunden, dass durch Verwendung von Formaldehyd oder Paraformaldehyd das Polyethylenthiuramdisulfid stabilisiert wird. Dies erfolgt beispielsweise in der Weise, dass man Polyethylenthiuramdisulfid mit Formaldehyd oder Paraformaldehyd mischt. Formaldehyd und Paraformaldehyd sind Formaldehyd abgebende Substanzen. Auf diese Weise erhält man ein stabiles Polyethylenthiuramdisulfid. Der Formaldehyd oder Paraformaldehyd kann beispielsweise in Mengen von 5 bis 50 Gew.-%, insbesondere 25 Gew.-%, bezogen auf Polyethylenthiuramdisulfid zur Stabilisierung von Polyethylenthiuramdisulfid verwendet werden. Anstelle von Polyethylenthiuramdisulfid kann auch eine Mischung stabilisiert werden, die neben Polyethylenthiuramdisulfid noch das Zinksalz der Ethylenbisdithiocarbaminsäure (Zineb) oder das entsprechende Ammoniakkomplexsalz (Zineb · 1NH$_3$, Zineb · 2NH$_3$) enthält. Beispielsweise enthält eine solche Mischung 5 bis 30 Gew.-% Polyethylenthiuramdisulfid und 95 bis 70 Gew.-% Zineb oder ein Ammoniakkomplexsalz. Durch Mischen der obengenannten Mischung mit Formaldehyd oder Paraformaldehyd erhält man ebenfalls ein stabiles Produkt. Zineb und seine Ammoniakkomplexsalze sind Zinebsalze.

Man kann beispielsweise einer wässrigen Suspension oder dem trockenen Polyethylenthiuramdisulfid (PETD) von 5 bis 50 Gew.-% Formaldehyd (FA) oder Paraformaldehyd (PA), bezogen auf PETD zusetzen. Ein so behandeltes PETD zeigt eine wesentliche Verbesserung der Lagerstabilität (Erhaltung des Wirkstoffes) ohne Einbusse der biologischen Wirksamkeit.

Eine sehr gute Wirkung wird erzielt, wenn man einer wässrigen PETD-Suspension zwischen 5 und 50% FA zugibt, wobei bevorzugt eine Zumischung einer Menge von 25% FA, bezogen auf PETD erfolgt. Eine Zugabe unter 5% bringt keine signifikante Lagerungsverbesserung. Zugaben über 50% beeinflussen die biologische Aktivität nachteilig und erzeugen Umweltprobleme während der Trocknung und Lagerung. Nach der Stabilisatorzugabe in die wässrige Suspension wird beispielsweise eine Rührzeit von mindestens 1, besser 2 Std. eingehalten, bevor die Trocknung beginnt. Die Temperatur beim Rühren beträgt etwa 25 bis 35°C. Falls das PA zu dem trockenen PETD zugesetzt wird, wird zweckmässig eine intensive Vermischung der Verbindungen zwecks Herstellung einer homogenen Mischung vorgenommen.

Die folgenden Beispiele zeigen die gute Wirkung von FA oder PA.

Die Beurteilung der Lagerstabilität erfolgte durch die Bestimmung des Wirkstoffgehaltes nach Lagerung bei Raumtemperatur (20 bis 25°C) und bei 50°C in einer Klimakammer, in der Grösse von Verkaufsverpackungen und in Reagenzgläsern, wobei im letzten Falle Mengen von 30 g eingesetzt wurden.

Als ein weiteres Merkmal für die Beurteilung der Stabilität dient der Gehalt an Ethylenthioharnstoff, da diese Substanz als Zersetzungsprodukt beim Abbau entsteht.

*Beispiel 1*

Zu 1 kg Sprühsuspension, bestehend aus 400 g PETD und 600 g Wasser werden unter starkem Rühren bei einer Anfangstemperatur von ca. 22°C 80 g einer 25%igen wässrigen Formaldehydlösung zugegeben. Danach erhöht man die Temperatur auf max. 30°C und rührt 30 min weiter. Auf dieselbe Art werden durch Zugabe von jeweils 160, 240 und 320 g 25%igem Formaldehyd drei weitere entsprechende Konzentrationen hergestellt.

Die auf diese Weise hergestellten Ssuspensionen werden mittels eines Technikumgerätes sprühgetrocknet (Eingangs-Temperatur: 180°C, Ausgangs-Temperatur: 75 bis 85°C).

Danach werden pro Beispiel verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Der Wirkstoffgehalt wird mittels abspaltbaren CS$_2$ bestimmt und der Ethylenthioharnstoff mittels Dünnschichtchromatographie geprüft.

PETD        ohne FA

Reagenzglaslagertest

| Wirkstoff-gehalt PETD in % | Lagerungs-zeit (Wochen) | ETU-Gehalt in % | Zugesetzte Formaldehyd-menge in % |
|---|---|---|---|
| 96,4 | 0 | 2,5 | 0 |
| 75,6 | 1 | mehr als 10 | |
| 38,4 | 2 | mehr als 10 | |
| 96,4 | 0 | 2,5 | 5 |
| 82,8 | 1 | 7,0 | |
| 40,0 | 2 | mehr als 10 | |
| 87,7 | 0 | 2,4 | 10 |
| 73,3 | 1 | 8,0 | |
| 55,4 | 2 | mehr als 10 | |
| 20,0 | 4 | mehr als 10 | |

| Wirkstoff-<br>gehalt<br>PETD in % | Lagerungs-<br>zeit<br>(Wochen) | ETU-<br>Gehalt<br>in % | Zugesetzte<br>Formaldehyd-<br>menge in % |
|---|---|---|---|
| 83,4 | 0 | 2,5 | 15 |
| 76,5 | 1 | 5,0 | |
| 65,0 | 4 | 10,0 | |
| 35,6 | 8 | mehr als 10 | |
| 74,6 | 0 | 2,5 | 20 |
| 72,0 | 1 | 5,0 | |
| 71,7 | 2 | 8,0 | |
| 65,5 | 4 | 8,0 | |
| 61,5 | 8 | 8,5 | |
| 60,0 | 12 | mehr als 10 | |

*Ergebnis*

Bei der Mischung mit 5 und 10% FA ist das Produkt nach 2 Wochen ziemlich zersetzt. 4 Wochen relativ stabil bleibt das Produkt mit 15% FA, während ein 20%iger FA-Zusatz die Ware 8 Wochen lang stabilisiert.

*Beispiel 2*

Zu einer Sprühsuspension, bestehend aus 420,0 kg PETD und 6200 l Wasser werden unter stetiger Rührung und bei einer Temperatur zwischen 25 und 28°C 210 kg einer 40%igen wässrigen Formaldehydlösung innerhalb von 45 min zulaufen lassen, anschliessend wird noch 90 min nachgerührt. Nach der darauffolgenden Sprühtrocknung in entsprechenden Produktionsanlagen werden jeweils 25 kg der trockenen Mischung in Säcken mit Polyethyleninnenfolie abgefüllt und die Lagerfähigkeit in einer Klimakammer und bei Raumtemperatur untersucht. Zwecks Verschärfung der Lagerbedingungen erfolgte noch eine zusätzliche Belastung der einzelnen Säcke durch ein Gewicht von 125 kg je Sack.

*Beispiel 3*

Zu frisch getrockneten 420 kg PETD werden 42 kg Paraformaldehyd zugemischt. Danach wird die Mischung gemahlen und homogenisiert. Anschliessend wird das Produkt in Säcken mit Polyethyleninnenfolie abgefüllt und wie in Beispiel 2 auf die Lagerungsstabilität hin untersucht.

Beispiel 2

PETD

Verpackungslagerungstest (Sack mit Polyethyleninnenfolie)
Ausgangsware PETD (unbehandelt)

| Wirkstoff bei<br>Versuchsbeginn<br>in % | Wirkstoff bei<br>Versuchsende<br>in % | Lagerungszeit<br>(Wochen) | Ethylenharnstoff<br>nach Versuchsende<br>in % | Bemerkungen |
|---|---|---|---|---|
| 95,6 | 70,5 | 8 | 8,0 | Raumtemperatur<br>(20°C) unbelastet |
| 95,6 | 68,3 | 8 | 8,0 | Raumtemperatur<br>(20°C) belastet<br>(mit 125 kg Gewicht) |
| 95,6 | 41,3 | 8 | mehr als 10 | Klimakammer<br>(50°C) unbelastet |
| 95,6 | 41,5 | 8 | mehr als 10 | Klimakammer<br>(50°C) belastet |

PETD              + 20% Formaldehyyd

Verpackungslagerungstest (Sack mit Polyethyleninnenfolie)

| Wirkstoff bei<br>Versuchsbeginn<br>in % | Wirkstoff bei<br>Versuchsende<br>in % | Lagerungszeit<br>(Wochen) | Ethylenharnstoff<br>nach Versuchsende<br>in % | Bemerkungen |
|---|---|---|---|---|
| 95,6 | 90,8 | 8 | 3,0 | Raumtemperatur<br>(20°C) unbelastet |
| 95,6 | 88,9 | 8 | 3,0 | Raumtemperatur<br>(20°C) belastet |
| 95,6 | 86,0 | 8 | 7,0 | 50°C unbelastet |
| 95,6 | 84,1 | 8 | 10,0 | 50°C belastet |

Beispiel 3

PETD             + 10% Paraformaldehyd

Verpackungslagerungstest (Sack mit Polyethyleninnenfolie)

| Wirkstoff bei Versuchsbeginn in % | Wirkstoff bei Versuchsende in % | Lagerungszeit (Wochen) | Ethylenharnstoff nach Versuchsende in % | Bemerkungen |
|---|---|---|---|---|
| 86,0 | 85,8 | 8 | 0,3 | Raumtemperatur (20°C) unbelastet |
| 86,0 | 85,9 | 8 | 0,3 | Raumtemperatur (20°C) belastet |
| 86,0 | 85,0 | 8 | 0,5 | 50°C unbelastet |
| 86,0 | 85,0 | 8 | 0,6 | 50°C belastet |

Die Ergebnisse zeigen bei unbehandelter Ware einen deutlichen Wirkstoffabbau. Die besten Werte erzielt man bei Zugabe von Paraformaldehyd. Die Zugabe von Formaldehyd bringt eine signifikante Lagerungsverbesserung. Paraformaldehyd kann anstelle von Formaldehyd verwendet werden, technisch ist es jedoch günstiger, eine Stabilisierung in flüssigem Zustand mit Formaldehyd durchzuführen.

*Beispiel 4*

Wie Beispiel 2 und 3, nur wurden zur Testung des Lagerverhaltens Reagenzgläser gefüllt und in einem Wärmeschrank bei 50°C gelagert.

PETD

Reagenzglaslagertest

| Wirkstoff bei Versuchsbeginn in % | Wirkstoff bei Versuchsende in % | Lagerungszeit (Wochen) | Ethylenharnstoff nach Versuchsende in % | Bemerkungen |
|---|---|---|---|---|
| 95,6 | weniger als 10 | 4 | mehr als 10 | unbehandelt |
| 86,0 | 70,1 | 4 | 0,5 | + 10% PA |
| 95,6 | 69,3 | 4 | 1,5 | + 20% FA |

*Beispiel 5*

In der Tabelle wird der Einfluss verschiedener Mengen Formaldehyd auf die Lagerungsstabilität von PETD dargestellt.

PETD             +FA

Verschiedene Verpackungslagertests in der Klimakammer bei 50°C

Wirkstoffverlust in % nach Wochen

| 1 | 2 | 4 | 8 | 12 | Formaldehyd-menge in % |
|---|---|---|---|---|---|
| 21 | 60 | 100 | | | 0 |
| 14 | 58 | 100 | | | 5 |
| 15 | 33 | 79 | 100 | | 10 |
| 10 | 15 | 22 | 53 | 100 | 15 |
| 3 | 14 | 20 | 24 | 26 | 20 |

Die folgenden Versuche werden mit einer Mischung aus 20% PETD und 80% Zinksalz der Ethylenbisdithiocarbaminsäure durchgeführt. Die Mischung wird als P.C. bezeichnet.

*Beispiel 6*

Zu 1 kg Sprühsuspension, bestehend aus 400 g P.C. und 600 g Wasser werden unter starkem Rühren bei einer Anfangstemperatur von ca. 22°C 8 g einer 25%igen reinen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%igem Formaldehyd vier weitere entsprechende Konzentrationen eingestellt.

Die auf diese Weise hergestellten Suspensionen werden mittels eines Technikumgerätes sprühgetrocknet (Eingangs-Temperatur: 200°C, Ausgangs-Temperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1,2 und 4 Wochen werden die Versuchsgläser geöffnet und der Inhalt analysiert.

P.C.

Reagenzglaslagertest

| Wirkstoff-gehalt % | Lage-rungszeit (Wochen) | ETU-Gehalt % | Formaldehydzusatz in % berechnet auf P.C. | berechnet auf PETD |
|---|---|---|---|---|
| 79,7 | 0 | 0,5 | 0 | 0 |
| 72,0 | 1 | 2,5 | | |
| 69,0 | 2 | 4,0 | | |
| 36,7 | 4 | mehr als 10,0 | | |
| 79,2 | 0 | 0,2 | 0,5 | 2,5 |
| 76,1 | 1 | 2,5 | | |
| 67,7 | 2 | 3,0 | | |
| 15,2 | 4 | mehr als 10,0 | | |
| 77,8 | 0 | 0,2 | 1,5 | 7,5 |
| 79,0 | 1 | 1,0 | | |
| 73,4 | 2 | 0,8 | | |
| 71,0 | 4 | 2,0 | | |
| 37,6 | 8 | 10,0 | | |
| 80,1 | 0 | 0,2 | 2,5 | 12,5 |
| 77,8 | 1 | 0,3 | | |
| 75,7 | 4 | 0,5 | | |
| 56,4 | 8 | 5,0 | | |
| 80,1 | 0 | 0,2 | 5,0 | 25 |
| 76,8 | 1 | 0,3 | | |
| 76,8 | 2 | 0,3 | | |
| 72,1 | 8 | 0,5 | | |
| 58,3 | 12 | 4,0 | | |
| 77,5 | 0 | 0,2 | 10,0 | 50 |
| 77,0 | 1 | 0,2 | | |
| 76,5 | 2 | 0,2 | | |
| 75,5 | 8 | 0,3 | | |
| 73,2 | 12 | 2,0 | | |

*Ergebnis*

Bei der Mischung mit 0,5% FA hat sich der Wirkstoff nach 2 bis 4 Wochen zur Hälfte zersetzt. Jeweils mindestens 4 Wochen stabil bleiben die Produkte mit 1,5 und 2,5% FA, während ein 5%iger FA-Zusatz die Ware mindestens 8 Wochen lang stabilisierte.

*Beispiel 7*

Zu einer Sprühsuspension, bestehend aus 420,0 kg P.C. und 6200 ℓ Wasser werden unter stetiger Rührung und bei einer Temperatur zwischen 25 bis 28°C 477 ℓ einer 40%igen wässrigen Formaldehydlösung innerhalb von 45 min zulaufen lassen, anschliessend wird noch 90 min nachgerührt. Nach der darauffolgenden Sprühtrocknung in entsprechenden Produktionsanlagen werden jeweils 25 kg der trockenen Mischung in Säcken mit PE-Innenfolie abgefüllt und die Lagerfähigkeit in einer Klimakammer und bei Raumtemperatur untersucht. Zwecks Verschärfung der Lagerbedingungen erfolgte noch eine zusätzliche Belastung der einzelnen Säcke durch entsprechende Gewichte von 125 kg je Sack.

*Beispiel 8*

Wie Beispiel 7, nur werden jetzt 12,6 kg Paraformaldehyd zugesetzt.

P.C.

Verpackungslagertest　　　+ 3% Paraformaldehyd (berechnet auf P.C.)　+ 15% Paraformaldehyd (berechnet auf PETD)

| Wirkstoff bei Versuchs-beginn in % | Wirkstoff bei Versuchs-ende in % | Lage-rungszeit (Wochen) | Ethylen-thioharn-stoff nach Versuchs-ende in % | Bemerkungen |
|---|---|---|---|---|
| 70,1 | 69,4 | 8 | 0,3 | Raumtemperatur (20°C) unbelastet |
| 70,1 | 68,7 | 8 | 0,3 | Raumtemperatur belastet mit je 125 kg je Sack |
| 70,1 | 68,1 | 8 | 0,7 | 50°C unbelastet |
| 70,1 | 64,7 | 8 | 0,3 | 50°C belastet |

P.C.　　　+ 5% Formaldehyd (berechnet auf P.C.)　+25% Formaldehyd (berechnet auf PETD)

Verpackungslagertest

| 69,3 | 69,3 | 8 | 0,1 | Raumtemperatur unbelastet |
| 69,3 | 69,3 | 8 | 0,1 | Raumtemperatur belastet |
| 69,3 | 69,3 | 8 | 0,3 | 50°C unbelastet |
| 69,3 | 69,3 | 8 | 0,3 | 50°C belastet |

Die besten Werte erzielt man bei Zugabe von Formaldehyd. Auch die Zugabe von Paraformaldehyd bringt eine signifikante Lagerungsverbesserung wie man auch an dem niedrigen Ethylenthioharnstoffgehalt erkennen kann.

*Beispiel 9*

Wie in den Beispielen 7 und 8, nur werden zur Testung des Lagerverhaltens Reagenzgläser gefüllt und in einem Wärmeschrank bei 50°C gelagert.

P.C.

Reagenzglaslagertest

| Wirkstoff bei Versuchsbeginn in % | Wirkstoff bei Versuchsende in % | Lage-rungszeit (Wochen) | ETU (%) | Bemerkungen |
|---|---|---|---|---|
| 71,0 | weniger als 10 | 4 | mehr als 10 | unbehandelt |
| 70,1 | 64,3 | 4 | weniger als 0,1 | +3% PA (berechnet auf P.C.) |
| 69,3 | 68,1 | 4 | weniger als 0,1 | +5% FA (berechnet auf P.C.) |

## Beispiel 10

In der Tabelle wird der Einfluss verschiedener Mengen Formaldehyd auf die Lagerungsstabilität von P.C. dargestellt.

P.C.          + Formaldehyd

Verschiedene Verpackungslagertests in der Klimakammer bei 50°C

Wirkstoffverlust in %
nach x Wochen:

x =

| 4 | 8 | 26 | 34 | 43 | 52 | Formaldehyd-menge (berechnet auf P.C.) |
|---|---|----|----|----|----|---|
| 47 | 73 | 100 | | | | ohne FA |
| 15 | 37 | 90 | 100 | | | +0,5% FA |
| 12 | 18 | 73 | 100 | | | +1,5% FA |
| 12 | 18 | 53 | 56 | 60 | 65 | +3,0% FA |
| 3 | 4 | 12 | 23 | 35 | 47 | +5,0% FA |

## Beispiel 11

Zu 1 kg Sprühsuspension, bestehend aus 400 g P.C. (Zineb-PETD: 95 : 5) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24 und 40 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb-PETD: 95 : 5

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 80,5 | 0 | 0,6 | 0 | 0 |
| 78,5 | 1 | 1,5 | | |
| 71,3 | 2 | 2,0 | | |
| 65,5 | 4 | 10,0 | | |
| 80,0 | 0 | 0,5 | 0,5 | 10,0 |
| 75,4 | 1 | 2,0 | | |
| 62,3 | 2 | 3,5 | | |
| 60,1 | 4 | mehr als 10,0 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 80,7 | 0 | 0,5 | 1,5 | 30,0 |
| 76,1 | 1 | 2,5 | | |
| 64,7 | 2 | 5,5 | | |
| 59,8 | 4 | 10,0 | | |
| 79,8 | 0 | 0,4 | 2,5 | 50,0 |
| 75,4 | 1 | 0,9 | | |
| 75,0 | 2 | 3,5 | | |
| 69,5 | 4 | 6,5 | | |

## Beispiel 12

Zu 1 kg Sprühsuspension, bestehend aus 400 g P.C. (Zineb-PETD: 90 : 10) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40 und 80 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb-PETD: 90 : 10

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 79,8 | 0 | 0,3 | 0 | 0 |
| 75,6 | 1 | 3,0 | | |
| 57,3 | 2 | 8,5 | | |
| 40,8 | 4 | mehr als 10,0 | | |
| 80,5 | 0 | 0,2 | 0,5 | 5 |
| 60,3 | 1 | 6,0 | | |
| 39,6 | 2 | 9,0 | | |
| 38,9 | 4 | mehr als 10,0 | | |
| 80,8 | 0 | 0,1 | 1,5 | 15 |
| 72,2 | 1 | 3,5 | | |
| 56,3 | 2 | 8,0 | | |
| 40,1 | 4 | 10,0 | | |
| 78,8 | 0 | 0,1 | 2,5 | 25 |
| 75,7 | 1 | 1,5 | | |
| 60,1 | 2 | 8,5 | | |
| 49,6 | 4 | 10,0 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 78,5 | 0 | 0,1 | 5,0 | 50 |
| 77,6 | 1 | 0,2 | | |
| 77,3 | 2 | 0,2 | | |
| 76,8 | 4 | 0,5 | | |
| 76,4 | 8 | 0,7 | | |
| 75,9 | 12 | 5,0 | | |

### Beispiel 13

Zu 1 kg Sprühsuspension, bestehend aus 400 g P.C. (Zineb-PETD: 80 : 20) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb-PETD: 80 : 20

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 79,7 | 0 | 0,5 | 0 | 0 |
| 72,0 | 1 | 2,5 | | |
| 69,0 | 2 | 4,0 | | |
| 36,7 | 4 | mehr als 10,0 | | |
| 79,2 | 0 | 0,2 | 0,5 | 2,5 |
| 76,1 | 1 | 2,5 | | |
| 67,7 | 2 | 3,0 | | |
| 15,2 | 4 | mehr als 10,0 | | |
| 77,8 | 0 | 0,2 | 1,5 | 7,5 |
| 79,0 | 1 | 1,0 | | |
| 73,4 | 2 | 0,8 | | |
| 71,0 | 4 | 2,0 | | |
| 37,6 | 8 | 10,0 | | |
| 80,1 | 0 | 0,2 | 2,5 | 12,5 |
| 77,8 | 1 | 0,3 | | |
| 75,7 | 4 | 0,5 | | |
| 56,4 | 8 | 5,0 | | |
| 80,1 | 0 | 0,2 | 5,0 | 25 |
| 76,8 | 1 | 0,3 | | |
| 76,8 | 2 | 0,3 | | |
| 72,1 | 8 | 0,5 | | |
| 58,3 | 12 | 4,0 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 77,5 | 0 | 0,2 | 10,0 | 50 |
| 77,0 | 1 | 0,2 | | |
| 76,5 | 2 | 0,2 | | |
| 75,5 | 8 | 0,3 | | |
| 73,2 | 12 | 2,0 | | |

### Beispiel 14

Zu 1 kg Sprühsuspension, bestehend aus 400 g P.C. (Zineb-PETD: 70 : 30) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb-PETD: 70 : 30

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 75,5 | 0 | 1,0 | 0 | 0 |
| 46,3 | 1 | 6,5 | | |
| 20,5 | 2 | mehr als 10,0 | | |
| 10,0 | 4 | mehr als 10,0 | | |
| 74,6 | 0 | 0,8 | 0,5 | 1,7 |
| 34,9 | 1 | 8,0 | | |
| 11,0 | 2 | mehr als 10,0 | | |
| 8,9 | 4 | mehr als 10,0 | | |
| 73,9 | 0 | 0,6 | 1,5 | 5,0 |
| 36,9 | 1 | 6,5 | | |
| 15,4 | 2 | 10,0 | | |
| 11,5 | 4 | 10,0 | | |
| 75,6 | 0 | 0,6 | 2,5 | 8,0 |
| 40,8 | 1 | 4,0 | | |
| 14,9 | 2 | mehr als 10,0 | | |
| 15,6 | 4 | 10,0 | | |
| 75,0 | 0 | 0,5 | 5,0 | 16,7 |
| 68,6 | 1 | 0,9 | | |
| 56,4 | 2 | 1,2 | | |
| 42,7 | 4 | 1,0 | | |
| 38,7 | 8 | 8,5 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 75,5 | 0 | 0,4 | 10,0 | 33,3 |
| 71,0 | 1 | 0,4 | | |
| 68,7 | 2 | 0,8 | | |
| 59,6 | 4 | 1,5 | | |
| 38,5 | 8 | 5,0 | | |

*Beispiel 15*

Zu 1 kg Sprühsuspension, bestehend aus 400 g P.C. (Zineb.$NH_3$-PETD: 95 : 5) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24 und 40 g 25%iger Formaldehydlösung vier weitere entsprechende Konzentrationen hergestellt.

Die auf diese Weise hergestellten Suspensionen werden mittels eines Technikumgerätes sprühge-trocknet (Eingangstemperatur: 200°C, Ausgangs-temperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$NH_3$-PETD: 95 : 5

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 81,0 | 0 | 0,6 | 0 | 0 |
| 71,0 | 1 | 5,0 | | |
| 66,3 | 2 | 8,0 | | |
| 52,3 | 4 | mehr als 10,0 | | |
| 80,3 | 0 | 0,4 | 0,5 | 10 |
| 75,9 | 1 | 4,5 | | |
| 60,6 | 2 | 10,0 | | |
| 50,0 | 4 | mehr als 10,0 | | |
| 79,8 | 0 | 0,3 | 1,5 | 30 |
| 71,0 | 1 | 0,3 | | |
| 55,9 | 2 | 6,9 | | |
| 47,8 | 4 | mehr als 10,0 | | |
| 80,5 | 0 | 0,3 | 2,5 | 50 |
| 72,5 | 1 | 0,5 | | |
| 63,1 | 2 | 5,0 | | |
| 58,9 | 4 | 10,0 | | |

*Beispiel 16*

Zu 1 kg Sprühsuspension, bestehend aus 400 g P.C. (Zineb.$NH_3$-PETD: 90 : 10) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40 und 80 g 25%iger Form-aldehydlösung vier weitere entsprechende Konzen-trationen hergestellt.

Die auf diese Weise hergestellten Suspensionen werden mittels eines Technikumgerätes sprühge-trocknet (Eingangstemperatur: 200°C, Ausgangs-temperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$NH_3$-PETD: 90 : 10

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 80,6 | 0 | 0,8 | 0 | 0 |
| 70,6 | 1 | 4,5 | | |
| 65,3 | 2 | 10,0 | | |
| 46,0 | 4 | mehr als 10,0 | | |
| 80,1 | 0 | 0,8 | 0,5 | 5 |
| 75,4 | 1 | 6,9 | | |
| 36,0 | 2 | mehr als 10,0 | | |
| 35,0 | 4 | mehr als 10,0 | | |
| 80,8 | 0 | 0,7 | 1,5 | 15 |
| 72,2 | 1 | 5,0 | | |
| 50,4 | 2 | mehr als 10,0 | | |
| 42,3 | 4 | mehr als 10,0 | | |
| 81,1 | 0 | 0,5 | 2,5 | 25 |
| 70,5 | 1 | 5,0 | | |
| 46,8 | 2 | 8,0 | | |
| 40,6 | 4 | mehr als 10,0 | | |
| 78,9 | 0 | 0,3 | 5,0 | 50 |
| 78,4 | 1 | 0,3 | | |
| 75,9 | 2 | 0,3 | | |
| 70,4 | 4 | 0,5 | | |
| 70,0 | 8 | 0,6 | | |
| 60,7 | 12 | 3,5 | | |

*Beispiel 17*

Zu 1 kg Sprühsuspension, bestehend aus 400 g P.C. (Zineb.$NH_3$-PETD: 80 : 20) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%iger For-maldehydlösung vier weitere entsprechende Kon-zentrationen hergestellt.

Die auf diese Weise hergestellten Suspensionen werden mittels eines Technikumgerätes sprühge-trocknet (Eingangstemperatur: 200°C, Ausgangs-temperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.NH$_3$-PETD: 80 : 20

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 79,4 | 0 | 0,5 | 0 | 0 |
| 66,3 | 1 | 6,5 | | |
| 32,4 | 2 | mehr als 10,0 | | |
| 25,3 | 4 | mehr als 10,0 | | |
| 79,0 | 0 | 0,5 | 0,5 | 2,5 |
| 63,2 | 1 | 6,0 | | |
| 35,4 | 2 | 10,0 | | |
| 20,6 | 4 | mehr als 10,0 | | |
| 78,4 | 0 | 0,5 | 1,5 | 7,5 |
| 70,7 | 1 | 0,9 | | |
| 20,3 | 2 | mehr als 10,0 | | |
| 15,5 | 4 | mehr als 10,0 | | |
| 79,5 | 0 | 0,4 | 2,5 | 12,5 |
| 68,9 | 1 | 0,9 | | |
| 33,8 | 2 | 3,5 | | |
| 28,3 | 4 | 10,0 | | |
| 78,4 | 0 | 0,3 | 5,0 | 25,0 |
| 78,1 | 1 | 0,3 | | |
| 71,2 | 4 | 0,5 | | |
| 70,0 | 8 | 0,6 | | |
| 70,0 | 12 | 1,0 | | |
| 76,3 | 0 | 0,3 | 10,0 | 50,0 |
| 76,0 | 1 | 0,2 | | |
| 74,1 | 2 | 0,1 | | |
| 73,6 | 4 | 0,5 | | |
| 71,8 | 8 | 0,5 | | |
| 70,0 | 12 | 0,8 | | |

*Beispiel 18*

Zu 1 kg Sprühsuspension, bestehend aus 400 g P.C. (Zineb.NH$_3$-PETD: 70 : 30) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40 und 160 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.NH$_3$-PETD: 70 : 30

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 78,3 | 0 | 1,5 | 0 | 0 |
| 40,0 | 1 | 10,0 | | |
| 10,0 | 2 | mehr als 10,0 | | |
| 1,5 | 4 | mehr als 10,0 | | |
| 89,4 | 0 | 1,5 | 0,5 | 1,7 |
| 35,1 | 1 | 10,0 | | |
| 16,8 | 2 | mehr als 10,0 | | |
| 0,5 | 4 | mehr als 10,0 | | |
| 80,0 | 0 | 0,9 | 1,5 | 5,0 |
| 55,9 | 1 | 8,9 | | |
| 24,3 | 2 | mehr als 10,0 | | |
| 3,5 | 4 | mehr als 10,0 | | |
| 80,0 | 0 | 1,0 | 2,5 | 8,3 |
| 68,6 | 1 | 10,0 | | |
| 44,5 | 2 | mehr als 10,0 | | |
| 11,0 | 4 | mehr als 10,0 | | |
| 79,4 | 0 | 0,5 | 5,0 | 16,7 |
| 75,6 | 1 | 0,5 | | |
| 72,1 | 2 | 0,8 | | |
| 70,0 | 4 | 1,3 | | |
| 45,2 | 8 | 4,5 | | |
| 35,0 | 12 | 8,5 | | |
| 76,2 | 0 | 0,3 | 10,0 | 33,3 |
| 73,0 | 1 | 0,3 | | |
| 71,1 | 2 | 1,0 | | |
| 68,3 | 4 | 1,5 | | |
| 61,2 | 8 | 4,0 | | |
| 56,5 | 12 | 6,5 | | |

*Beispiel 19*

Zu 1 kg Sprühsuspension, bestehend aus 400 g P.C. (Zineb.2NH$_3$-PETD: 95 : 5) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24 und 40 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$2NH_3$-PETD: 95 : 5

| Wirkstoffgehalt in % | Lagerungszeit in Wochen | ETU-Gehalt in % | Formaldehyd ber. P.C. | Formaldehyd ber. PETD |
|---|---|---|---|---|
| 80,1 | 0 | 0,6 | 0 | 0 |
| 75,4 | 1 | 3,0 | | |
| 66,4 | 2 | 9,5 | | |
| 35,4 | 4 | mehr als 10,0 | | |
| 80,4 | 0 | 0,6 | 0,5 | 10 |
| 72,2 | 1 | 6,6 | | |
| 40,1 | 2 | 10,0 | | |
| 39,6 | 4 | 10,0 | | |
| 79,6 | 0 | 0,6 | 1,5 | 30 |
| 70,6 | 1 | 0,9 | | |
| 44,8 | 2 | 8,0 | | |
| 29,0 | 4 | mehr als 10,0 | | |
| 79,4 | 0 | 0,4 | 2,5 | 50 |
| 61,1 | 1 | 4,0 | | |
| 39,9 | 2 | 8,5 | | |
| 30,5 | 4 | mehr als 10,0 | | |

*Beispiel 20*

Zu 1 kg Sprühsuspension, bestehend aus 400 g P.C. (Zineb.$2NH_3$-PETD: 90 : 10) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40 und 80 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$2NH_3$-PETD: 90 : 10

| Wirkstoffgehalt in % | Lagerungszeit in Wochen | ETU-Gehalt in % | Formaldehyd ber. P.C. | Formaldehyd ber. PETD |
|---|---|---|---|---|
| 79,9 | 0 | 0,5 | 0 | 0 |
| 65,1 | 1 | 4,5 | | |
| 34,7 | 2 | 8,0 | | |
| 25,8 | 4 | mehr als 10,0 | | |
| 79,8 | 0 | 0,5 | 0,5 | 5 |
| 55,8 | 1 | 5,5 | | |
| 34,1 | 2 | 9,5 | | |
| 28,6 | 4 | mehr als 10,0 | | |

| Wirkstoffgehalt in % | Lagerungszeit in Wochen | ETU-Gehalt in % | Formaldehyd ber. P.C. | Formaldehyd ber. PETD |
|---|---|---|---|---|
| 79,8 | 0 | 0,5 | 1,5 | 15 |
| 40,1 | 1 | 5,5 | | |
| 35,2 | 2 | 10,0 | | |
| 25,7 | 4 | 10,0 | | |
| 79,9 | 0 | 0,5 | 2,5 | 25 |
| 70,0 | 1 | 0,9 | | |
| 40,6 | 2 | 10,0 | | |
| 26,2 | 4 | mehr als 10,0 | | |
| 80,0 | 0 | 0,3 | 5,0 | 50 |
| 79,8 | 1 | 0,3 | | |
| 78,8 | 2 | 0,5 | | |
| 76,4 | 4 | 0,8 | | |
| 73,9 | 8 | 0,8 | | |
| 72,8 | 12 | 1,3 | | |

*Beispiel 21*

Zu 1 kg Sprühsuspension, bestehend aus 400 g P.C. (Zineb.$2NH_3$-PETD: 80 : 20) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$2NH_3$-PETD: 80 : 20

| Wirkstoffgehalt in % | Lagerungszeit in Wochen | ETU-Gehalt in % | Formaldehyd ber. P.C. | Formaldehyd ber. PETD |
|---|---|---|---|---|
| 80,5 | 0 | 0,5 | 0 | 0 |
| 66,2 | 1 | 4,5 | | |
| 45,1 | 2 | 8,5 | | |
| 15,3 | 4 | mehr als 10,0 | | |
| 80,4 | 0 | 0,5 | 0,5 | 2,5 |
| 70,2 | 1 | 5,5 | | |
| 35,6 | 2 | 9,5 | | |
| 14,7 | 4 | mehr als 10,0 | | |
| 80,5 | 0 | 0,5 | 1,5 | 7,5 |
| 70,1 | 1 | 6,5 | | |
| 40,2 | 2 | 8,0 | | |
| 19,8 | 4 | mehr als 10,0 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 79,4 | 0 | 0,5 | 2,5 | 12,5 |
| 65,1 | 1 | 1,5 | | |
| 34,3 | 2 | 4,5 | | |
| 17,6 | 4 | 9,0 | | |
| 78,9 | 0 | 0,4 | 5,0 | 25,0 |
| 78,8 | 1 | 0,4 | | |
| 76,7 | 2 | 0,5 | | |
| 75,5 | 4 | 0,5 | | |
| 75,0 | 8 | 0,5 | | |
| 74,8 | 12 | 1,0 | | |
| 74,2 | 0 | 0,3 | 10,0 | 50,0 |
| 74,0 | 1 | 0,2 | | |
| 73,0 | 2 | 0,3 | | |
| 73,1 | 4 | 0,4 | | |
| 72,0 | 8 | 0,5 | | |
| 71,1 | 12 | 0,8 | | |

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 78,4 | 0 | 0,5 | 2,5 | 8,3 |
| 34,9 | 1 | 5,0 | | |
| 26,7 | 2 | 8,0 | | |
| 13,0 | 4 | mehr als 10,0 | | |
| 78,1 | 0 | 0,3 | 5,0 | 16,7 |
| 71,8 | 1 | 3,5 | | |
| 70,1 | 2 | 3,6 | | |
| 69,2 | 4 | 4,5 | | |
| 48,6 | 8 | 8,5 | | |
| 40,5 | 12 | mehr als 10,0 | | |
| 76,7 | 0 | 0,3 | 10,0 | 33,3 |
| 71,0 | 1 | 0,3 | | |
| 64,8 | 2 | 3,0 | | |
| 55,3 | 4 | 4,0 | | |
| 50,4 | 8 | 9,5 | | |
| 40,0 | 12 | mehr als 10,0 | | |

*Beispiel 22*

Zu 1 kg Sprühsuspension, bestehend aus 400 g P.C. (Zineb.$2NH_3$-PETD: 70 : 30) und 600 g Wasser, werden unter starkem Rühren bei einer Anfangstemperatur von 22°C 8 g einer 25%igen wässrigen Formaldehydlösung zugegeben. Danach erhöht man die Temperatur auf max. 30°C und rührt 30 min weiter. Auf dieselbe beschriebene Art werden durch Zugabe von jeweils 24, 40, 80 und 160 g 25%iger Formaldehydlösung vier weitere entsprechende Konzentrationen hergestellt.

Die auf diese Weise hergestellten Suspensionen werden mittels eines Technikumgerätes sprühgetrocknet (Eingangstemperatur: 200°C, Ausgangstemperatur: 80 bis 85°C).

Danach werden verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Stabilisator: FA

Polyram-Combi: Zineb.$2NH_3$-PETD: 70 : 30

| Wirkstoff-gehalt in % | Lage-rungszeit in Wochen | ETU-Gehalt in % | Form-aldehyd ber. P.C. | Form-aldehyd ber. PETD |
|---|---|---|---|---|
| 80,1 | 0 | 0,9 | 0 | 0 |
| 28,2 | 1 | mehr als 10,0 | | |
| 4,0 | 2 | mehr als 10,0 | | |
| 1,0 | 4 | mehr als 10,0 | | |
| 79,8 | 0 | 1,1 | 0,5 | 1,7 |
| 14,6 | 1 | mehr als 10,0 | | |
| 10,3 | 2 | mehr als 10,0 | | |
| 4,0 | 4 | mehr als 10,0 | | |
| 78,9 | 0 | 0,8 | 1,5 | 5,0 |
| 40,0 | 1 | 4,8 | | |
| 10,9 | 2 | mehr als 10,0 | | |
| >1,0 | 4 | mehr als 10,0 | | |

*Beispiel 23*

1 kg Sprühsuspension, bestehend aus 400 g PETD und 600 g Wasser, wird bei einer Temperatur von 30°C 30 min gerührt und mittels eines Technikumgerätes sprühgetrocknet (Eingangstemperatur: 180°C, Ausgangstemperatur: 75 bis 85°C).

Zu je 200 g dieser getrockneten Ware werden jeweils 10 g, 30g, 50 g und 100 g Paraformaldehyd (PA) zugesetzt und mittels eines Mischers homogenisiert.

Danach werden pro Beispiel verschiedene Reagenzgläser mit den entsprechenden Produkten gefüllt und mit einem Gummistopfen gut verschlossen und in einen Temperaturschrank von 50°C gebracht. In Abständen von 1, 2 und 4 Wochen werden die Versuchsgläser geöffnet und der Inhalt analysiert.

Der Wirkstoffgehalt wird mittels abspaltbaren $CS_2$ bestimmt und der Ethylenthioharnstoff mittels Dünnschichtchromatographie geprüft.

PETD

Reagenzglaslagertest

| Wirkstoff-gehalt PETD in % | Lagerungszeit in Wochen | ETU-Gehalt in % | Paraform-aldehyd-zusatz in % |
|---|---|---|---|
| 96,4 | 0 | 2,5 | 0 |
| 75,6 | 1 | mehr als 10,0 | |
| 38,4 | 2 | mehr als 10,0 | |
| 91,7 | 0 | 2,5 | 5 |
| 90,3 | 1 | 0,8 | |
| 85,3 | 2 | 1,5 | |
| 58,9 | 4 | 10,0 | |
| 86,0 | 0 | 0,3 | 15 |
| 85,3 | 1 | 0,3 | |
| 81,6 | 2 | 0,3 | |
| 70,1 | 4 | 0,5 | |
| 65,9 | 8 | 0,6 | |

| Wirkstoff-gehalt PETD in % | Lagerunsgzeit in Wochen | ETU-Gehalt in % | Paraform-aldehyd-zusatz in % |
|---|---|---|---|
| 71,4 | 0 | 0,3 | 25 |
| 70,8 | 1 | 0,3 | |
| 69,5 | 2 | 0,5 | |
| 68,3 | 4 | 0,5 | |
| 62,1 | 8 | 0,7 | |
| 46,8 | 0 | 0,3 | 50 |
| 46,8 | 1 | 0,3 | |
| 46,3 | 2 | 0,2 | |
| 46,4 | 4 | 0,2 | |
| 43,5 | 8 | 0,3 | |

Ergebnis:

Bei einer Zugabe von 15% PA werden die besten Ergebnisse erzielt. Eine 5%ige PA-Zugabe zeigt auch eine wesentliche Verbesserung des Stabilitätsverhaltens an.

*Beispiel 24*

1 kg Sprühsuspension, bestehend aus 400 g P.C. (Zineb-PETD: 95 : 5) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1,5 g, 2,5 g und 5 g Paraformaldehyd zugesetzt und anschliessend mittels eines Mischers homogenisiert.

Stabilisator: PA

Polyram-Combi: Zineb-PETD: 95 : 5

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 81,0 | 0 | 0,6 | 0 | 0 |
| 71,0 | 1 | 5,0 | | |
| 66,3 | 2 | 8,0 | | |
| 52,3 | 4 | mehr als 10,0 | | |
| 79,3 | 0 | 0,5 | 0,75 | 15 |
| 70,5 | 1 | 4,0 | | |
| 65,1 | 2 | 5,5 | | |
| 49,6 | 4 | 8,5 | | |
| 79,0 | 0 | 0,5 | 1,25 | 25 |
| 70,1 | 1 | 0,9 | | |
| 68,6 | 2 | 6,5 | | |
| 51,3 | 4 | 8,5 | | |
| 79,0 | 0 | 0,4 | 2,5 | 50 |
| 75,8 | 1 | 0,5 | | |
| 69,4 | 2 | 3,5 | | |
| 66,3 | 4 | 4,0 | | |

*Beispiel 25*

1 kg Sprühsuspension, bestehend aus 400 g P.C. (Zineb-PETD: 90 : 10) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1 g, 3 g, 5 g und 10 g Paraformaldehyd zugesetzt und anschliessend mittels eines Mischers homogenisiert.

Stabilisator: PA

Polyram-Combi: Zineb-PETD: 90 : 10

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,8 | 0 | 0,3 | 0 | 0 |
| 75,6 | 1 | 3,0 | | |
| 57,8 | 2 | 8,5 | | |
| 40,8 | 4 | mehr als 10,0 | | |
| 80,6 | 0 | 0,2 | 0,5 | 5,0 |
| 72,1 | 1 | 5,5 | | |
| 56,8 | 2 | mehr als 10,0 | | |
| 40,4 | 4 | mehr als 10,0 | | |
| 81,0 | 0 | 0,2 | 1,5 | 15,0 |
| 66,2 | 1 | 5,0 | | |
| 54,1 | 2 | 5,5 | | |
| 35,7 | 4 | mehr als 10,0 | | |
| 80,6 | 0 | 0,2 | 2,5 | 25,0 |
| 79,5 | 1 | 0,8 | | |
| 77,7 | 2 | 1,5 | | |
| 69,6 | 4 | 2,5 | | |
| 77,8 | 0 | 0,1 | 5,0 | 50,0 |
| 75,2 | 1 | 0,2 | | |
| 70,8 | 2 | 0,5 | | |
| 65,6 | 4 | 0,3 | | |

*Beispiel 26*

1 kg Sprühsuspension, bestehend aus 400 g P.C. (Zineb-PETD: 80 : 20) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 2 g, 6 g, 10 g und 20 g Paraformaldehyd zugesetzt und anschliessend mittels eines Mischers homogenisiert.

Stabilisator: PA

Polyram-Combi: Zineb-PETD: 8 : 2

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,7 | 0 | 0,5 | 0 | 0 |
| 72,0 | 1 | 2,5 | | |
| 69,0 | 2 | 4,0 | | |
| 36,7 | 4 | mehr als 10,0 | | |

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,8 | 0 | 0,5 | 1,0 | 5,0 |
| 71,4 | 1 | 3,0 | | |
| 70,5 | 2 | 5,5 | | |
| 40,8 | 4 | mehr als 10,0 | | |
| 79,3 | 0 | 0,5 | 3,0 | 15,0 |
| 74,6 | 1 | 1,5 | | |
| 70,5 | 2 | 7,5 | | |
| 59,8 | 4 | 10,0 | | |
| 79,1 | 0 | 0,4 | 5,05 | 25,0 |
| 70,6 | 1 | 0,5 | | |
| 70,0 | 2 | 0,6 | | |
| 68,9 | 4 | 0,8 | | |
| 71,4 | 0 | 0,3 | 10,0 | 50,0 |
| 71,0 | 1 | 0,4 | | |
| 70,8 | 2 | 0,9 | | |
| 68,5 | 4 | 2,0 | | |

### Beispiel 27

1 kg Sprühsuspension, bestehend aus 400 g P.C. (Zineb-PETD: 70 : 30) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 3 g, 9 g, 15 g und 30 g Paraformaldehyd zugesetzt und anschliessend mittels eines Mischers homogenisiert.

Stabilisator: PA

Polyram-Combi: Zineb-PETD: 70 : 30

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 75,5 | 0 | 1,0 | 0 | 0 |
| 46,3 | 1 | 6,5 | | |
| 20,5 | 2 | mehr als 10,0 | | |
| 10,0 | 4 | mehr als 10,0 | | |
| 75,0 | 0 | 1,5 | 1,5 | 5 |
| 56,3 | 1 | 9,0 | | |
| 23,8 | 2 | mehr als 10,0 | | |
| 7,5 | 4 | mehr als 10,0 | | |
| 73,8 | 0 | 0,8 | 4,5 | 15 |
| 69,5 | 1 | 1,5 | | |
| 60,3 | 2 | 2,0 | | |
| 55,4 | 4 | 3,0 | | |
| 70,8 | 0 | 0,8 | 7,0 | 25 |
| 70,5 | 1 | 0,5 | | |
| 70,5 | 2 | 0,6 | | |
| 69,9 | 4 | 1,0 | | |
| 61,8 | 0 | 0,5 | 15,0 | 50 |
| 60,9 | 1 | 0,4 | | |
| 60,3 | 2 | 0,3 | | |
| 55,9 | 4 | 0,2 | | |

### Beispiel 28

1 kg Sprühsuspension, bestehend aus 400 g P.C. (Zineb.NH$_3$-PETD: 95 : 5) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1,5 g, 2,5 g und 5 g Paraformaldehyd zugesetzt und anschliessend mittels eines Mischers homogenisiert.

Stabilisator: PA

Polyram-Combi: Zineb.NH$_3$-PETD: 95 : 5

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 81,0 | 0 | 0,6 | 0 | 0 |
| 71,0 | 1 | 5,0 | | |
| 66,3 | 2 | 8,0 | | |
| 52,3 | 4 | mehr als 10,0 | | |
| 80,7 | 0 | 0,7 | 0,75 | 15 |
| 75,4 | 1 | 4,5 | | |
| 65,6 | 2 | 9,0 | | |
| 60,3 | 4 | 10,0 | | |
| 80,6 | 0 | 0,8 | 1,25 | 25 |
| 71,4 | 1 | 5,0 | | |
| 66,9 | 2 | 9,0 | | |
| 54,8 | 4 | 10,0 | | |
| 78,9 | 0 | 0,4 | 2,5 | 50 |
| 76,7 | 1 | 0,5 | | |
| 73,3 | 2 | 1,5 | | |
| 70,0 | 4 | 2,5 | | |

### Beispiel 29

1 kg Sprühsuspension, bestehend aus 400 g P.C. (Zineb.NH$_3$-PETD: 90 : 10) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1 g, 3 g, 5 g und 10 g Paraformaldehyd zugesetzt und anschliessend mittels eines Mischers homogenisiert.

Stabilsator: PA

Polyram-Combi: Zineb.NH$_3$-PETD: 90 : 10

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 80,6 | 0 | 0,8 | 0 | 0 |
| 70,6 | 1 | 4,5 | | |
| 65,3 | 2 | 10,0 | | |
| 46,0 | 4 | mehr als 10,0 | | |
| 80,4 | 0 | 0,8 | 0,5 | 5,0 |
| 75,6 | 1 | 5,5 | | |
| 46,7 | 2 | mehr als 10,0 | | |
| 38,9 | 4 | mehr als 10,0 | | |

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,5 | 0 | 0,7 | 1,5 | 15,0 |
| 70,6 | 1 | 5,0 | | |
| 45,4 | 2 | mehr als 10,0 | | |
| 36,9 | 4 | mehr als 10,0 | | |
| 79,7 | 0 | 0,8 | 2,5 | 25,0 |
| 71,6 | 1 | 1,0 | | |
| 65,4 | 2 | 5,5 | | |
| 59,8 | 4 | 9,5 | | |
| 77,6 | 0 | 0,5 | 5,0 | 50,0 |
| 75,4 | 1 | 0,6 | | |
| 71,9 | 2 | 0,4 | | |
| 65,4 | 4 | 0,5 | | |

## Beispiel 30

1 kg Sprühsuspension, bestehend aus 400 g P.C. (Zineb.NH$_3$-PETD: 80 : 20) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 2 g, 6 g, 10 g und 20 g Paraformaldehyd zugesetzt und anschliessend mittels eines Mischers homogenisiert.

Stabilisator: PA

Polyram-Combi: Zineb.NH$_3$-PETD: 80 : 20

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,4 | 0 | 0,5 | 0 | 0 |
| 66,3 | 1 | 6,5 | | |
| 32,4 | 2 | mehr als 10,0 | | |
| 25,3 | 4 | mehr als 10,0 | | |
| 79,4 | 0 | 0,5 | 1,0 | 5,0 |
| 70,8 | 1 | 3,5 | | |
| 45,6 | 2 | 10,0 | | |
| 25,7 | 4 | mehr als 10,0 | | |
| 79,8 | 0 | 0,6 | 3,0 | 15,0 |
| 74,0 | 1 | 2,5 | | |
| 61,6 | 2 | 8,5 | | |
| 55,9 | 4 | 9,5 | | |
| 75,3 | 0 | 0,5 | 5,0 | 25,0 |
| 74,5 | 1 | 0,6 | | |
| 70,3 | 2 | 1,0 | | |
| 68,6 | 4 | 2,0 | | |
| 71,2 | 0 | 0,3 | 10,0 | 50,0 |
| 70,5 | 1 | 0,3 | | |
| 68,6 | 2 | 0,3 | | |
| 65,4 | 4 | 0,3 | | |

## Beispiel 31

1 kg Sprühsuspension, bestehend aus 400 g P.C. (Zineb.NH$_3$-PETD: 70 : 30) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 3 g, 9 g, 15 g und 30 g Paraformaldehyd zugesetzt und anschliessend mittels eines Mischers homogenisiert.

Stabilisator: PA

Polyram-Combi: Zineb.NH$_3$-PETD: 70 : 30

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 78,3 | 0 | 1,5 | 0 | 0 |
| 40,0 | 1 | 10,0 | | |
| 10,0 | 2 | mehr als 10,0 | | |
| 1,5 | 4 | mehr als 10,0 | | |
| 77,6 | 0 | 1,5 | 1,5 | 5 |
| 30,6 | 1 | 10,0 | | |
| 19,8 | 2 | mehr als 10,0 | | |
| 4,5 | 4 | mehr als 10,0 | | |
| 77,1 | 0 | 0,4 | 4,5 | 15 |
| 72,3 | 1 | 1,0 | | |
| 65,4 | 2 | 5,0 | | |
| 61,9 | 4 | 7,5 | | |
| 73,8 | 0 | 0,3 | 7,5 | 25 |
| 73,4 | 1 | 0,4 | | |
| 71,5 | 2 | 1,0 | | |
| 69,6 | 4 | 1,5 | | |
| 70,5 | 0 | 0,4 | 15,0 | 50 |
| 68,3 | 1 | 0,3 | | |
| 65,6 | 2 | 0,2 | | |
| 60,9 | 4 | 0,2 | | |

## Beispiel 32

1 kg Sprühsuspension, bestehend aus 400 g P.C. (Zineb.2NH$_3$-PETD: 95 : 5) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1,5 g, 2,5 g und 5 g Paraformaldehyd zugesetzt und anschliessend mittels eines Mischers homogenisiert.

Stabilisator: PA

Polyram-Combi: Zineb.2NH$_3$-PETD: 95 : 5

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 80,1 | 0 | 0,6 | 0 | 0 |
| 75,4 | 1 | 3,0 | | |
| 66,4 | 2 | 9,5 | | |
| 35,4 | 4 | mehr als 10,0 | | |

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 80,4 | 0 | 0,6 | 0,75 | 15 |
| 76,8 | 1 | 3,5 | | |
| 53,7 | 2 | 7,5 | | |
| 40,6 | 4 | mehr als 10,0 | | |
| 80,1 | 0 | 0,5 | 1,25 | 25 |
| 75,4 | 1 | 1,5 | | |
| 65,9 | 2 | 5,5 | | |
| 60,3 | 4 | 10,0 | | |
| 79,6 | 0 | 0,5 | 2,5 | 50 |
| 70,4 | 1 | 4,5 | | |
| 65,9 | 2 | 5,5 | | |
| 56,3 | 4 | 10,0 | | |

*Beispiel 33*

1 kg Sprühsuspension, bestehend aus 400 g P.C. (Zineb.2NH$_3$-PETD: 90 : 10) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 1 g, 3 g, 5 g und 10 g Paraformaldehyd zugesetzt und anschliessend mittels eines Mischers homogenisiert.

Stabilisator: PA

Polyram-Combi: Zineb.2NH$_3$-PETD: 90 : 10

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 79,9 | 0 | 0,5 | 0 | 0 |
| 65,1 | 1 | 4,5 | | |
| 34,7 | 2 | 8,0 | | |
| 25,8 | 4 | mehr als 10,0 | | |
| 79,8 | 0 | 0,5 | 0,5 | 5,0 |
| 60,6 | 1 | 5,0 | | |
| 44,4 | 2 | 7,5 | | |
| 30,9 | 4 | mehr als 10,0 | | |
| 79,7 | 0 | 0,5 | 1,5 | 15.0 |
| 61,4 | 1 | 4,5 | | |
| 51,6 | 2 | 8,5 | | |
| 31,2 | 4 | mehr als 10,0 | | |
| 79,0 | 0 | 0,5 | 2,5 | 25,0 |
| 70,4 | 1 | 0,9 | | |
| 65,3 | 2 | 6,5 | | |
| 61,7 | 4 | 10,0 | | |
| 76,6 | 0 | 0,4 | 5,0 | 50,0 |
| 75,4 | 1 | 0,5 | | |
| 73,9 | 2 | 0,4 | | |
| 65,7 | 4 | 0,2 | | |

*Beispiel 34*

1 kg Sprühsuspension, bestehend aus 400 g P.C. (Zineb.2NH$_3$-PETD: 80 : 20) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 2 g, 6 g, 10 g und 20 g Paraformaldehyd zugesetzt und anschliessend mittels eines Mischers homogenisiert.

Stabilisator: PA

Polyram-Combi: Zineb.2NH$_3$-PETD: 80 : 20

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 80,5 | 0 | 0,5 | 0 | 0 |
| 66,2 | 1 | 4,5 | | |
| 45,1 | 2 | 8,5 | | |
| 15,3 | 4 | mehr als 10,0 | | |
| 80,5 | 0 | 0,5 | 1,0 | 5,0 |
| 68,6 | 1 | 5,5 | | |
| 51,3 | 2 | 10,0 | | |
| 19,8 | 4 | mehr als 10,0 | | |
| 78,5 | 0 | 0,5 | 3,0 | 15,0 |
| 71,3 | 1 | 1,0 | | |
| 67,5 | 2 | 5,5 | | |
| 60,5 | 4 | 10,0 | | |
| 76,5 | 0 | 0,5 | 5,0 | 25,0 |
| 75,4 | 1 | 0,4 | | |
| 74,8 | 2 | 0,8 | | |
| 74,6 | 4 | 1,5 | | |
| 73,0 | 0 | 0,4 | 10,0 | 50,0 |
| 73,0 | 1 | 0,4 | | |
| 71,6 | 2 | 0,3 | | |
| 69,4 | 4 | 0,2 | | |

*Beispiel 35*

1 kg Sprühsuspension, bestehend aus 400 g P.C. (Zineb.2NH$_3$-PETD: 70 : 30) und 600 g Wasser, wird bei einer Temperatur von 30°C 30 min lang gerührt und anschliessend mittels eines Technikumgerätes sprühgetrocknet (Eingangstemperatur: 200°C, Ausgangstemperatur: 80 bis 85°C).

Zu je 200 g dieser getrockneten Ware werden jeweils 3 g, 9 g, 15 g und 30 g Paraformaldehyd zugesetzt und anschliessend mittels eines Mischers homogenisiert.

Stabilisator: PA

Polyram-Combi: Zineb.2NH$_3$-PETD: 70 : 30

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 80,1 | 0 | 0,9 | 0 | 0 |
| 28,2 | 1 | mehr als 10,0 | | |
| 4,0 | 2 | mehr als 10,0 | | |
| 1,0 | 4 | mehr als 10,0 | | |

| Wirkstoff-gehalt in % | Lage-rungszeit in Wochen | ETU-Gehalt in % | Paraform-aldehyd ber. P.C. | Paraform-aldehyd ber. PETD |
|---|---|---|---|---|
| 78,8 | 0 | 1,0 | 1,5 | 5 |
| 30,6 | 1 | mehr als 10,0 | | |
| 15,7 | 2 | mehr als 10,0 | | |
| 5,0 | 4 | mehr als 10,0 | | |
| 78,0 | 0 | 0,5 | 4,5 | 15 |
| 70,3 | 1 | 5,0 | | |
| 60,5 | 2 | 8,5 | | |
| 55,5 | 5 | mehr als 10,0 | | |
| 73,4 | 0 | 0,4 | 7,5 | 25 |
| 73,2 | 1 | 0,3 | | |
| 73,0 | 2 | 0,5 | | |
| 71,1 | 4 | 0,8 | | |
| 65,3 | 0 | 0,5 | 15,0 | 50 |
| 65,1 | 1 | 0,5 | | |
| 62,4 | 2 | 0,4 | | |
| 62,0 | 4 | 0,4 | | |

## Patentansprüche

1. Verwendung von Formaldehyd oder Paraformaldehyd zur Stabilisierung von Polyethylenthiuramdisulfid.

2. Verfahren zur Herstellung von stabilem Polyethylenthiuramdisulfid, dadurch gekennzeichnet, dass man Polyethylenthiuramdisulfid mit Formaldehyd oder Paraformaldehyd mischt.

3. Verfahren nach Anspruch 2, dadurch gekennzeichnet, dass man mit 5 bis 50% (Gew.-%) Formaldehyd oder Paraformaldehyd, bezogen auf Polyethylenthiuramdisulfid mischt.

4. Verfahren nach Anspruch 2, dadurch gekennzeichnet, dass man ein Polyethylenthiuramdisulfid verwendet, das mit dem Zinksalz der Ethylenbisdithiocarbaminsäure oder dem entsprechenden Zinkammoniak-komplexsalz gemischt ist.

5. Fungizide Mischung, enthaltend Polyethylenthiuramdisulfid und eine Formaldehyd abgebende Substanz.

6. Fungizide Mischung, enthaltend Polyethylenthiuramdisulfid, eine Formaldehyd abgebende Substanz und ein Zineb-Salz.

## Claims

1. The use of formaldehyde or paraformaldehyde for stabilizing polyethylene thiuram disulfide.

2. A process for the preparation of stable polyethylene thiuram disulfide, wherein polyethylene thiuram disulfide is mixed with formaldehyde or paraformaldehyde.

3. A process as claimed in claim 2, wherein from 5 to 50% by weight, based on polyethylene thiuram disulfide, of formaldehyde or paraformaldehyde is used.

4. A process as claimed in claim 2, wherein the polyethylene thiuram disulfide used has been mixed with the zinc salt of ethylenebisdithiocarbamic acid or with the corresponding ammonia complex of this salt.

5. A fungicidal mixture containing polyethylene thiuram disulfide and a formaldehyde-donating substance.

6. A fungicidal mixture containing polyethylene thiuram disulfide, a formaldehyde-donating substance and a zineb salt.

## Revendications

1. Utilisation de l'aldéhyde formique ou du paraformaldéhyde pour stabiliser le disulfure de polyéthylène-thiuram.

2. Procédé de préparation d'un disulfure de polyéthylène-thiuram stable, caractérisé en ce que l'on mélange au disulfure de polyéthylène-thiuram de l'aldéhyde formique ou du paraformaldéhyde.

3. Procédé suivant la revendication 2, caractérisé en ce que l'on mélange au disulfure de polyéthylène-thiuram entre 5 et 50% de son poids d'aldéhyde formique ou de paraformaldéhyde.

4. Procédé suivant la revendication 2, caractérisé en ce que l'on emploie un disulfure de polyéthylène-thiuram, auquel est mélangé du sel de zinc de l'acide éthylène-bis-dithio-carbamique ou du sel complexe de zinc et d'ammoniac correspondant.

5. Composition fongicide, contenant du disulfure de polyéthylène-thiuram et une substance libérant de l'aldéhyde formique.

6. Composition fongicide, contenant du disulfure de polyéthylène-thiuram, une substance libérant de l'aldéhyde formique et un sel de Zineb.